# DEMANDE DE BREVET EUROPEEN

(11) **EP 4 557 166 A1**
(43) Date de publication de la demande: **21.05.2025**
(21) Numéro de dépôt: 24213329.6
(22) Date de dépôt: 15.11.2024
(51) Int. Cl.: G06N 3/045, G06N 20/00, G06N 20/20

(54) **PROCÉDÉ ET DISPOSITIF DE DÉTERMINATION D'APPARTENANCE AUX DONNÉES D'APPRENTISSAGE UTILISÉES POUR L'ENTRAÎNEMENT D'UN MODÈLE DE CLASSIFICATION DE DONNÉES PAR APPRENTISSAGE MACHINE**

(30) Priorité: 15.11.2023 FR 2312499
(71) Demandeur: THALES, 92190 Meudon (FR)
(72) Inventeur: HÉLIOU, Alice, 91767 PALAISEAU (FR); THOUVENOT, Vincent, 91767 PALAISEAU (FR); MORISSE, Baptiste, 91767 PALAISEAU (FR); LAMPE, Rodolphe, 91767 PALAISEAU (FR); HUYNH, Cong Bang, 91767 PALAISEAU (FR)
(74) Mandataire: Lavoix

(57) **Abrégé**

Ce dispositif de détermination d'appartenance aux données d'apprentissage utilisées pour l'entraînement d'un modèle cible (8) de classification met en oeuvre, sur un ensemble (10) de données à traiter, des modules de :
- génération (20) d'un nombre N supérieur à 2 de partitions distinctes de l'ensemble de données à traiter (10) en un premier et un deuxième sous-ensembles de données,
- calcul (22) par apprentissage machine de N modèles témoins (16₁,...,16N), de même structure que ledit modèle cible (8);
-apprentissage machine (24) sur un premier sous-ensemble de modèles témoins d'au moins deux modèles d'inférence d'appartenance (26₁,..., 26_{P}) distincts fournissant chacun, pour chaque donnée à traiter, une prédiction d'appartenance aux données d'apprentissage du modèle cible,
- apprentissage machine, sur un deuxième sous-ensemble de modèles témoins, des paramètres d'au moins un modèle de décision (24) prenant en entrée lesdites prédictions d'appartenance et fournissant en sortie une prédiction d'appartenance consolidée.

## Description

La présente invention concerne un procédé de détermination d'appartenance aux données d'apprentissage utilisées pour l'entraînement d'un modèle de classification de données par apprentissage machine, dit modèle cible.

L'invention concerne également un dispositif associé et un programme d'ordinateur associé.

L'invention concerne également un procédé et dispositif de génération d'un modèle de classification de données par apprentissage machine sécurisé vis-à-vis d'attaques par inférence d'appartenance.

L'invention se situe dans le domaine de la sécurité pour des applications utilisant l'intelligence artificielle.

De nombreux systèmes appliqués, par exemple dans le domaine industriel, médical ou militaire, utilisent des modèles de classification automatique des données, par exemple des modèles basés sur des réseaux de neurones artificiels, qui sont entraînés par apprentissage machine.

Ce type de modèle de classification comporte un très large nombre de paramètres, dont les valeurs sont calculées et mises à jour de manière dynamique. Il est nécessaire d'apprendre les valeurs des paramètres définissant un modèle de classification, l'apprentissage (également appelée entraînement) des paramètres s'effectuant dans une phase d'apprentissage sur des quantités de données très importantes. De manière classique, de tels modèles de classification prennent en entrée des données d'entrée, par exemple sous forme vectorielle ou matricielle, de type connu, et fournissent en sortie un label de classification (ou étiquette de classification) des données.

Par exemple, les données d'entrée sont des images, de dimensions prédéterminées, et les labels de classification représentent des classes prédéterminées, par exemple représentatives de types d'objet présent dans la scène représentée par l'image, selon l'application envisagée.

Les données d'entrée utilisées pour l'apprentissage, appelées données d'apprentissage, sont issues soit de bases de données publiques, soit de bases de données privées. Pour certaines applications nécessitant un certain niveau de sécurité, par exemple des applications médicales, ou militaires, il est critique de protéger les données d'apprentissage, et en particulier de s'assurer qu'il n'est pas possible d'obtenir des informations relatives aux données d'apprentissage à partir d'un modèle de classification entraîné.

Des publications récentes décrivent des modèles d'attaque par inférence d'appartenance (de l'anglais « Membership inférence attacks »). Un modèle d'attaque par inférence d'appartenance permet de prédire, à partir d'un modèle de classification cible, si une donnée à traiter appartient ou n'appartient pas aux données d'apprentissage utilisées pour l'entraînement du modèle cible. Ce type d'attaque peut alors être mis en oeuvre par un propriétaire légitime de données qui ont par exemple été piratées par un tiers malveillant sur un serveur, de déterminer ultérieurement si les données piratées ont été utilisées pour entraîner un modèle de classification. De plus, la connaissance de ce type d'attaque permet par la suite de renforcer la sécurité des données effectivement utilisées dans une phase d'apprentissage machine des paramètres d'un modèle de classification par un acteur légitime.

L'article de Di Wu, Saiyu Qi, Yong Qi, Qian Li, Bowen Cai, Qi Guo, Jingxian Cheng,"Understanding and defending against White-box membership inférence attack in deep learning,Knowledge-Based Systems", publié en 2023, décrit l'utilisation d'attaques d'inférence d'appartenance dans un objectif de défense.

On connaît plusieurs méthodes d'attaque par inférence d'appartenance, mettant en oeuvre des modèles d'inférence d'appartenance.

En particulier, on connaît des modèles d'inférence d'appartenance nécessitant la connaissance de la structure du modèle cible, par exemple, lorsqu'il s'agit d'un réseau de neurones, la structure comprend le nombre de couches, le nombre de neurones par couches, les liaisons entre les couches, les fonctions d'activation et les valeurs des poids. En d'autres termes, tous les paramètres définissant le modèle cible sont connus. Ces modèles d'inférence d'appartenance font partie des attaques dites « white box », le modèle cible étant considéré transparent.

Par exemple, l'article « Membership Inference Attack Using Self Influence Functions » de G. Cohen et R. Giryes publié en 2022 décrit une attaque par inférence d'appartenance de type « white box » utilisant des fonctions d'auto-influence.

On connaît également des attaques par inférence d'appartenance sur un modèle cible utilisable pour obtenir une classification à partir d'une donnée à traiter, mais dont la structure, et plus généralement les paramètres ne sont pas connus. Ces attaques sont également appelées attaques « black box », le modèle cible étant considéré opaque, tel une boîte noire.

Par exemple, l'article « Membership inference attacks from first principles » de N. Carlini et al, publié dans IEEE Symposium on Security and Privacy, 2022, décrit une attaque de ce type.

Cependant, chaque méthode d'attaque par inférence connue a des avantages et des incovénients, et leurs performances varient en fonction de l'ensemble de données à traiter.

Il n'existe pas à l'heure actuelle d'outil pour comparer les modèles d'inférence d'appartenance ou pour déterminer quel modèle produira de meilleurs performances sur un ensemble de données à traiter.

Le but de l'invention est alors de proposer un procédé de détermination d'appartenance aux données d'apprentissage d'un modèle de classification permettant d'obtenir des performances améliorées, en particulier dans la détermination d'appartenance effective ou détection de vrais positifs.

A cet effet, l'invention a pour objet un procédé de détermination d'appartenance aux données d'apprentissage utilisées pour l'entraînement d'un modèle de classification de données par apprentissage machine, dit modèle cible, le procédé étant mis en oeuvre par un processeur de calcul, et comportant, dans une phase d'apprentissage, mise en oeuvre sur un ensemble de données à traiter, des étapes de :
- génération d'un nombre N supérieur à 2 de partitions distinctes de l'ensemble de données à traiter en un premier et un deuxième sous-ensembles de données,
- calcul par apprentissage machine de N modèles témoins, chaque modèle témoin ayant une même structure que ledit modèle cible, le calcul comportant l'apprentissage des paramètres de chaque modèle témoin à partir d'un premier sous-ensemble de données d'une des partitions, pour fournir en sortie une classification sensiblement identique à celle fournie par le modèle cible;
- apprentissage machine sur un premier sous-ensemble de modèles témoins d'au moins deux modèles d'inférence d'appartenance distincts fournissant chacun, pour chaque donnée à traiter, une prédiction d'appartenance ou de non-appartenance aux données d'apprentissage du modèle cible,
- apprentissage machine, sur un deuxième sous-ensemble de modèles témoins, des paramètres d'au moins un modèle de décision prenant en entrée lesdites prédictions d'appartenance ou de non-appartenance et fournissant en sortie une prédiction d'appartenance ou de non-appartenance consolidée.

Avantageusement, le procédé de détermination d'appartenance aux données d'apprentissage proposé combine au moins deux modèles d'inférence d'appartenance distincts, et met en oeuvre un modèle de décision. De préférence, le modèle de décision prend en considération également des scores de confiance de chaque modèle d'inférence d'appartenance.

Le procédé de détermination d'appartenance aux données d'apprentissage selon l'invention peut également présenter une ou plusieurs des caractéristiques ci-dessous, prises indépendamment ou selon toutes les combinaisons techniquement envisageables.

Au moins un des modèles d'inférence d'appartenance fournit, pour chaque donnée à traiter, un score de confiance associé à la prédiction d'appartenance ou de non-appartenance aux données d'apprentissage du modèle cible, et l'apprentissage machine dudit au moins un modèle de décision prend en entrée lesdits scores de confiance.

Chaque modèle d'inférence d'appartenance distinct fournit pour chaque donnée à traiter, un score de confiance associé à la prédiction d'appartenance ou de non-appartenance aux données d'apprentissage du modèle cible, et l'apprentissage machine, sur un deuxième sous-ensemble de modèles témoins, des paramètres d'au moins un modèle de décision prend en entrée lesdites prédictions d'appartenance ou de non-appartenance et les scores de confiance associés fournis par chaque modèle d'inférence d'appartenance distinct.

Le procédé comporte en outre une phase opérationnelle comportant, pour au moins une donnée à traiter, des étapes de :
- mise en oeuvre de chacun desdits modèles d'inférence d'appartenance sur ladite donnée à traiter pour obtenir des prédictions d'appartenance ou de non-appartenance et les scores de confiance associés ;
- détermination d'une prédiction consolidée d'appartenance ou de non-appartenance de ladite donnée à traiter aux données d'apprentissage par application dudit modèle de décision sur les prédictions d'appartenance ou de non-appartenance et les scores de confiance associés.

Le procédé met en oeuvre un premier modèle d'inférence d'appartenance utilisant une connaissance des paramètres du modèle cible, et un deuxième modèle d'inférence d'appartenance sans utilisation des paramètres du modèle cible.

Une pluralité de modèles de décision sont mis en oeuvre parmi des modèles de : régression logistique, forêt aléatoire, amplification adaptative, amplification de gradient, modèle bayésien naïf.

Le procédé comporte en outre une étape de détermination d'appartenance ou non-appartenance pour obtenir une prédiction finale d'appartenance ou non-appartenance par combinaison des résultats des modèles de décision.

La combinaison des résultats est effectuée par vote majoritaire ou vote majoritaire pondéré.

Selon un autre aspect, l'invention concerne un dispositif de détermination d'appartenance aux données d'apprentissage de détermination d'appartenance aux données d'apprentissage utilisées pour l'entraînement d'un modèle de classification de données par apprentissage machine, dit modèle cible, le dispositif comportant un processeur de calcul, configuré, dans une phase d'apprentissage, pour mettre en oeuvre sur un ensemble de données à traiter :
- un module de génération d'un nombre N supérieur à 2 de partitions distinctes de l'ensemble de données à traiter en un premier et un deuxième sous-ensembles de données,
- un module de calcul par apprentissage machine de N modèles témoins, chaque modèle témoin ayant une même structure que ledit modèle cible, le calcul comportant l'apprentissage des paramètres de chaque modèle témoin à partir du premier sous-ensemble de données d'une des partitions, pour fournir en sortie une classification sensiblement identique à celle fournie par le modèle cible;
- un module d'apprentissage machine sur un premier sous-ensemble de modèles témoins d'au moins deux modèles d'inférence d'appartenance distincts fournissant chacun, pour chaque donnée à traiter, une prédiction d'appartenance ou de non-appartenance aux données d'apprentissage du modèle cible,
- un module d'apprentissage machine, sur un deuxième sous-ensemble de modèles témoins, des paramètres d'au moins un modèle de décision prenant en entrée lesdites prédictions d'appartenance ou de non-appartenance et fournissant en sortie une prédiction d'appartenance ou de non-appartenance consolidé.

Avantageusement, ce dispositif est configuré pour mettre en oeuvre un procédé de détermination d'appartenance aux données d'apprentissage tel que brièvement décrit ci-dessus.

Selon un autre aspect, l'invention concerne un support d'enregistrement d'informations, sur lequel sont mémorisées des instructions logicielles pour l'exécution d'un procédé de détermination d'appartenance aux données d'apprentissage tel que brièvement décrit ci-dessus, lorsque ces instructions sont exécutées par un dispositif électronique programmable.

Selon un autre aspect, l'invention concerne un programme d'ordinateur comportant des instructions logicielles qui, lorsqu'elles sont mises en oeuvre par un dispositif électronique programmable, mettent en oeuvre un procédé de détermination d'appartenance aux données d'apprentissage tel que brièvement décrit ci-dessus.

Selon un autre aspect, l'invention concerne un procédé de génération d'un modèle de classification de données par apprentissage machine sécurisé vis-à-vis d'attaques par inférence d'appartenance, pour des données d'apprentissage sensibles, comportant les étapes suivantes mises en oeuvre par un processeur de calcul :
A)-apprentissage d'un modèle de classification sur un ensemble de données d'apprentissage,
B)-sélection d'un ensemble de données à traiter comportant un sous-ensemble de données sensibles de l'ensemble de données d'apprentissage, un sous-ensemble de données non sensibles de l'ensemble de données d'apprentissage, et un sous-ensemble de données de test qui ne font pas partie de données d'apprentissage,
C)-mise en oeuvre d'une phase d'apprentissage d'un procédé de détermination d'appartenance aux données d'apprentissage tel que décrit ci-dessus sur le modèle de classification, pour obtenir au moins deux modèles d'inférence d'appartenance distincts et au moins un modèle de décision permettant de fournir une prédiction d'appartenance ou de non-appartenance consolidée ;
D1)- pour chaque donnée à traiter, prédiction d'appartenance de ladite donnée à traiter l'ensemble de données d'apprentissage en appliquant lesdits modèles d'appartenance d'inférence distincts et de décision, et la mémorisation de la prédiction d'appartenance consolidée obtenue,
D2) - vérification d'une condition de sécurité, et si la vérification indique une sécurité insatisfaisante pour au moins une donnée du sous-ensemble de données sensibles, dite donnée vulnérable,
D3)-application d'un procédé de désapprentissage de l'au moins une donnée vulnérable.

Selon une caractéristique préférentielle, les étapes D1), D2), D3) sont répétées jusqu'à ce que la condition de sécurité soit validée pour toutes les données sensibles ou jusqu'à ce qu'une condition d'arrêt soit vérifiée.

Selon une caractéristique préférentielle, la vérification de la condition de sécurité indique si la prédiction d'appartenance consolidée pour au moins une donnée sensible fait partie d'un pourcentage prédéterminé des prédictions d'appartenance les plus élevées.

Selon un autre aspect, l'invention concerne un dispositif de génération d'un modèle de classification de données par apprentissage machine sécurisé vis-à-vis d'attaques par inférence d'appartenance, configuré pour mettre en oeuvre un procédé de génération d'un modèle de classification de données par apprentissage machine sécurisé vis-à-vis d'attaques par inférence d'appartenance tel que décrit ci-dessus.

L'invention apparaîtra plus clairement à la lecture de la description qui va suivre, donnée uniquement à titre d'exemple non limitatif, et faite en référence aux dessins dans lesquels :
- la figure 1 est une représentation schématique des principaux modules d'un dispositif de détermination d'appartenance aux données d'apprentissage utilisées pour l'entraînement d'un modèle de classification de données par apprentissage machine selon un mode de réalisation ;
- la figure 2 est un synoptique des principales étapes d'un mode de réalisation du procédé de détermination d'appartenance dans la phase d'apprentissage ;
- la figure 3 est une illustration schématique d'une pluralité de partitions de données ;
- la figure 4 est un synoptique des principales étapes d'un mode de réalisation du procédé de détermination d'appartenance dans la phase opérationnelle ;
- La figure 5 est un synoptique des principales étapes d'un mode de réalisation d'un procédé de génération d'un modèle de classification par apprentissage machine sécurisé.

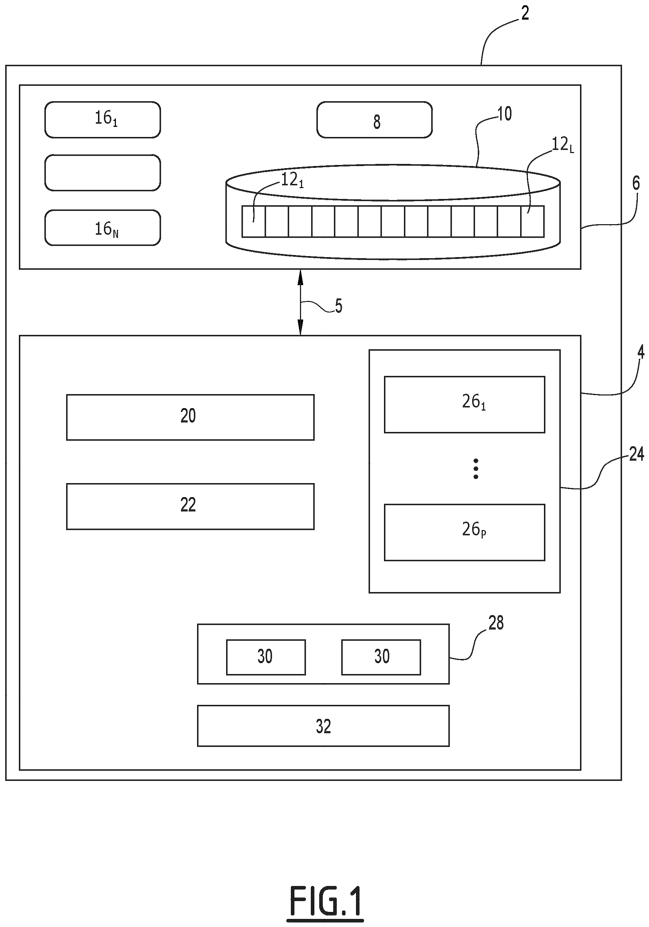

La figure 1 représente schématiquement les principaux modules d'un dispositif 2 de détermination d'appartenance au données d'apprentissage utilisées préalablement pour l'entraînement d'un modèle de classification cible MC.

Le dispositif 2 est un dispositif électronique programmable, e.g un ordinateur. En variante non représenté, le dispositif 2 est formé d'une pluralité de dispositifs électroniques programmables connectés entre eux.

Le dispositif 2 comporte au moins un processeur de calcul 4, une unité de mémoire électronique 6, adaptées à communiquer via un bus de communication 5.

En complément, le dispositif 2 comporte également une interface de communication avec des dispositifs distants, par un protocole de communication choisi, par exemple un protocole filaire et/ou un protocole de communication radio, ainsi qu'une interface homme machine ; ces interfaces sont réalisées de manière classique et ne sont pas représentées dans la figure 1.

L'unité de mémoire électronique mémorise le modèle cible (MC) 8, qui est un modèle de classification de données d'entrée préalablement entraîné par apprentissage machine sur un ensemble de données d'apprentissage.

L'ensemble de données d'apprentissage préalablement utilisé n'est pas connu.

Le modèle cible est entraîné pour classifier des données d'entrée représentées sous forme vectorielle ou matricielle de dimension(s) prédéterminées.

Par exemple, dans une application, les données d'entrée sont des images numériques d'objets, à classifier dans un ensemble prédéterminé de classes.

La classification consiste par exemple à associer un label de classification (ou étiquette de classification) à chaque donnée d'entrée.

De nombreuses applications utilisent ce type de modèle de classification pour la reconnaissance d'objets à partir d'images numériques.

Dans un mode de réalisation, le modèle cible est réalisé sous forme d'un réseau de neurones.

De manière connue, un réseau de neurones comporte une succession ordonnée de couches de neurones dont chacune prend ses entrées sur les sorties de la couche précédente.

Plus précisément, chaque couche comprend des neurones prenant leurs entrées sur les sorties des neurones de la couche précédente, ou bien sur les variables d'entrée pour la première couche.

En variante, des structures de réseaux de neurones plus complexes peuvent être envisagées avec une couche qui peut être reliée à une couche plus lointaine que la couche immédiatement précédente.

À chaque neurone est également associée une opération, c'est-à-dire un type de traitement, à effectuer par ledit neurone au sein de la couche de traitement correspondante.

Chaque couche est reliée aux autres couches par une pluralité de synapses. Un poids synaptique est associé à chaque synapse, et chaque synapse forme une liaison entre deux neurones. C'est souvent un nombre réel, qui prend des valeurs positives comme négatives. Dans certains cas, le poids synaptique est un nombre complexe.

Chaque neurone est propre à effectuer une somme pondérée des valeur(s) reçue(s) de la part des neurones de la couche précédente, chaque valeur étant alors multipliée par le poids synaptique respectif de chaque synapse, ou liaison, entre ledit neurone et les neurones de la couche précédente, puis à appliquer une fonction d'activation, typiquement une fonction non-linéaire, à ladite somme pondérée, et à délivrer en sortie dudit neurone, en particulier aux neurones de la couche suivante qui lui sont connectés, la valeur résultant de l'application de la fonction d'activation. La fonction d'activation permet d'introduire une non-linéarité dans le traitement effectué par chaque neurone. La fonction sigmoïde, la fonction tangente hyperbolique, la fonction de Heaviside sont des exemples de fonction d'activation.

En complément facultatif, chaque neurone est également apte à appliquer, en outre, un facteur multiplicatif, et un biais additif, à la sortie de la fonction d'activation, et la valeur délivrée en sortie dudit neurone est alors le produit de la valeur facteur multiplicatif et de la valeur issue de la fonction d'activation, additionnée du biais.

Un réseau de neurones à convolution est aussi parfois dénommé réseau de neurones convolutif ou par le sigle CNN qui renvoie à la dénomination anglaise de « *Convolutional Neural Networks ».*

Dans un réseau de neurones à convolution, chaque neurone d'une même couche présente exactement le même schéma de connexion que ses neurones voisins, mais à différentes positions d'entrée. Le motif de connexion est appelé noyau de convolution ou, plus souvent, « *kernel* » en référence à la dénomination anglaise correspondante.

Une couche de neurones entièrement connectée est une couche dans laquelle les neurones de ladite couche sont chacun connectés à tous les neurones de la couche précédente.

Un tel type de couche est plus souvent dénommé selon le terme anglais de « *fully connected* », et parfois désigné sous la dénomination « couche dense ».

Les valeurs des poids, facteurs multiplicateurs et biais le cas échéant sont apprises lors d'une phase d'apprentissage machine pour réaliser la tâche de classification.

L'invention s'applique avec tous les types de réseau de neurones.

De manière générale, il est considéré que les paramètres du modèle cible, et en particulier du réseau de neurones formant le modèle cible, sont connus, les paramètres incluant les structures et les valeurs des poids appris par apprentissage machine.

Outre le modèle cible, l'unité de mémoire 6 mémorise également un ensemble 10 de données 12ᵢ à traiter.

Chaque donnée à traiter 12ᵢ est une donnée numérique, représentée sous la même forme vectorielle ou matricielle que les données d'entrée du modèle cible 8, et de même dimension(s) prédéterminée(s).

Les données à traiter sont des données susceptibles d'avoir été utilisées lors de l'entraînement du modèle cible 8. Chaque donnée à traiter est une instance (ou un exemple) d'une des classes de sortie du modèle cible.

L'ensemble de données à traiter a un cardinal L, L étant un nombre entier positif, de préférence supérieur à 2.

En complément facultatif, l'ensemble 8 de données à traiter peut être augmenté en appliquant une méthode d'augmentation de données , par exemple par traitement d'images lorsque les données à traiter sont des images numériques (e.g. rotation, translation, retournement (ou flipping en anglais) vertical ou horizontal). Cela permet notamment d'assurer qu'un nombre suffisant d'instances des classes est disponible pour le calcul de modèles témoins, décrit ci-après.

Le processeur 4 est configuré pour mettre en oeuvre un module 20 de génération d'un nombre N supérieur à 2 de partitions distinctes de l'ensemble de données à traiter en un premier et un deuxième sous-ensembles de données.

Il comporte également un module 22 de calcul par apprentissage machine de N modèles témoins (MT) 16₁... 16_{N}, qui sont mémorisés dans l'unité de mémoire 6.

Chaque modèle témoin 16ⱼ est un modèle de classification de même structure que le modèle cible 8, et les paramètres du modèle témoin sont appris par apprentissage machine sur le premier sous-ensemble de données d'une des partitions générées, avec l'objectif d'obtenir une classification sensiblement identique à celle du modèle cible, et en particulier avec l'objectif d'obtenir une distribution statistique en sortie similaire à la distribution statistique en sortie du modèle cible.

En d'autres termes, chaque modèle témoin « imite » le modèle cible, le modèle témoin étant entraîné sur une base de données d'apprentissage (e.g. le premier-sous ensemble d'une partition choisie) connue.

Le processeur 4 comporte en outre un module 24 d'apprentissage machine sur un premier sous-ensemble de modèles témoins d'au moins deux modèles d'inférence d'appartenance 26₁,..., 26_{P} distincts fournissant chacun, pour chaque donnée à traiter, une prédiction d'appartenance ou de non-appartenance aux données d'apprentissage du modèle de classification cible et de préférence un score de confiance associé.

Par exemple et comme décrit plus en détail ci-après, deux modèles d'inférence d'appartenance distincts et complémentaires sont mis au point, un premier modèle de type « white box », le modèle cible étant considéré connu, et un deuxième modèle de type « black box », le modèle cible étant considéré inconnu.

De manière plus générale, le nombre P de modèles d'inférence d'appartenance est quelconque, supérieur ou égal à 2.

Enfin, le processeur 4 comporte un module 28 d'apprentissage machine, sur un deuxième sous-ensemble de modèles témoins, des paramètres d'un ou plusieurs modèle(s) de décision 30 prenant en entrée lesdites prédictions d'appartenance ou de non-appartenance et les scores de confiance associés fournis par les P modèles d'inférence d'appartenance distincts. Le module de décision fournit en sortie une prédiction d'appartenance ou non-appartenance consolidée.

Dans un mode de réalisation, les modèles de décision 30 comprennent un ou plusieurs classifieurs choisis parmi des modèles de : régression logistique, forêt aléatoire, amplification adaptative, amplification de gradient, modèle bayésien naïf. Bien entendu, cette liste n'est pas exhaustive, toute méthode de classification statistique est applicable.

Lorsque plusieurs modèles de décision sont mis en oeuvre, un module de détermination 32 par combinaison des résultats des modèles de décision 30 est également mis en oeuvre. Par exemple, la combinaison est réalisée par vote majoritaire pour obtenir une prédiction finale, également appelée décision finale. Ainsi, une décision finale est obtenue pour chaque donnée à traiter quant à l'appartenance ou la non-appartenance de la donnée à traiter aux données d'apprentissage du modèle cible.

Bien entendu, après l'apprentissage machine des modèles d'inférence d'appartenance 26₁..26_{P}, et du ou des modèles de décision 30, chacun de ces modèles devient un modèle entraîné par apprentissage machine exécutable pour mettre en oeuvre la tâche pour laquelle il a été entraîné.

Ainsi, dans une phase opérationnelle postérieure à la phase d'apprentissage, le modèle cible 8, les modèles d'inférence d'appartenance 26₁..26_{P}, le ou les modèles de décision 30 et le module de détermination 32 sont exécutés sur une donnée à traiter pour déterminer l'appartenance ou la non-appartenance de cette donnée aux données d'apprentissage du modèle cible 6.

Dans un mode de réalisation, les modules 20, 22, 26, 24, 28, 30, 32 sont réalisés sous forme d'instructions logicielles formant un programme d'ordinateur, qui, lorsqu'il est exécuté par un dispositif électronique programmable, met en oeuvre un procédé de détermination d'appartenance aux données d'apprentissage selon l'invention.

En variante non représentée, les modules 22, 24, 26, 28,30, 32 sont réalisés chacun sous forme de composants logiques programmables, tels que des FPGA (de l'anglais *Field Programmable Gate Array*), des microprocesseurs, des composants GPGPU (de l'anglais *General-purpose processing on graphies processing*)*,* ou encore de circuits intégrés dédiés, tels que des ASIC (de l'anglais *Application Spécifie Integrated Circuit).*

Le programme d'ordinateur comportant des instructions logicielles est en outre apte à être enregistré sur un support d'enregistrement d'informations, non-transitoire et lisible par ordinateur. Ce support lisible par ordinateur est par exemple, un médium apte à mémoriser les instructions électroniques et à être couplé à un bus d'un système informatique. A titre d'exemple, ce support est un disque optique, un disque magnéto-optique, une mémoire ROM, une mémoire RAM, tout type de mémoire non-volatile (par exemple EPROM, EEPROM, FLASH, NVRAM), une carte magnétique ou une carte optique.

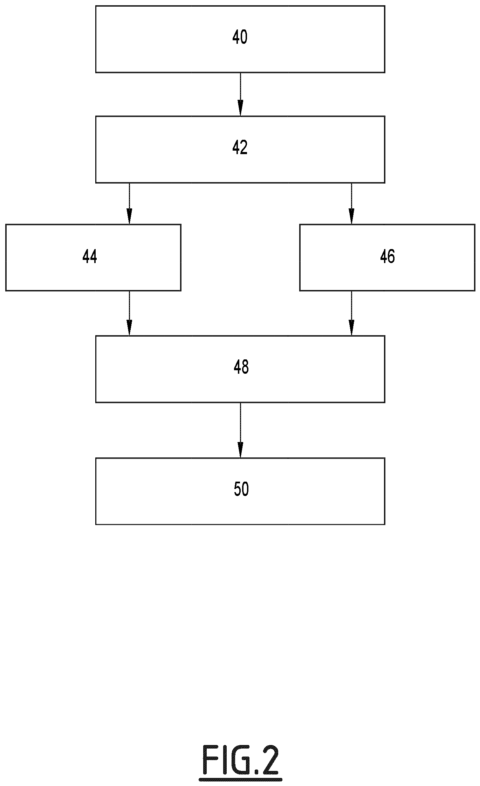

La figure 2 est un synoptique des principales étapes d'un procédé de détermination d'appartenance dans la phase d'apprentissage, selon un mode de réalisation dans lequel le nombre P de modèles d'inférence d'appartenance est égal à 2.

En entrée sont fournis le modèle cible et l'ensemble de données à traiter.

Le procédé comprend une étape 40 de génération de N partitions de l'ensemble des données à traiter.

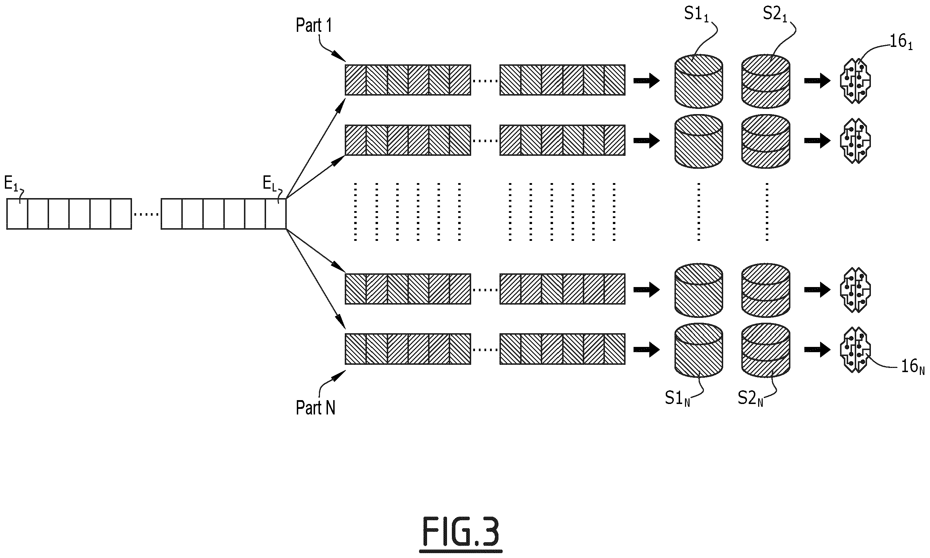

Comme montré plus explicitement dans la figure 3, pour chaque partition Partᵢ parmi les N partitions Part₁, Part₂,...Part_{N}, un premier sous-ensemble de données S1 comprend des instances destinées à l'apprentissage, notamment à l'apprentissage des modèles témoins, et un deuxième sous-ensemble de données S2 comprend des données destinées aux tests et validations.

Les données de validation sont utilisées pour choisir des hyperparamètres du modèle témoin et vérifier la convergence de ce modèle.

Les données de test ne sont pas utilisées dans la phase d'apprentissage et servent à évaluer la performance du modèle.

Dans un mode de réalisation, le premier sous-ensemble de données S1, utilisées pour l'apprentissage ; comporte plus de données que le deuxième sous-ensemble de données S2, utilisées pour le test ou la validation, de préférence le premier sous-ensemble de données S1 comporte au moins 60% des données.

Dans un autre mode de réalisation, les sous-ensembles de données comportent le même nombre de données.

Par exemple pour la génération d'une partition donnée, chaque donnée d'entrée est attribuée, par exemple aléatoirement, au premier sous-ensemble de données S1 ou au deuxième sous-ensemble de données S2.

Dans un mode de réalisation, N/2 partitions sont générées aléatoirement, et les autres N/2 sont générées par complémentarité, en inversant l'attribution de chaque donnée, de manière à assurer que chaque donnée est attribuée N/2 fois au premier sous-ensemble de données S1 (i.e. pour l'apprentissage) et N/2 fois au deuxième sous-ensemble de données S2.

Dans un mode de réalisation préféré, pour chaque donnée, on choisit aléatoirement N/2 partitions dans lesquelles la donnée d'entrée est attribuée au premier sous-ensemble de données S1 (i.e. pour l'apprentissage), et par complémentarité, la donnée est attribuée au deuxième sous-ensemble de données S2 dans les N/2 partitions restantes. Dans cette variante, l'attribution à l'un ou l'autre des sous-ensembles dans chaque partition se fait par donnée.

Un ensemble de N partitions telles que chaque donnée attribuée N/2 fois au premier sous-ensemble S1 et N/2 fois au deuxième sous-ensemble S2 est dit ensemble équilibré.

Le procédé comporte ensuite une étape 42 de calcul par apprentissage machine de N modèles témoins du modèle cible, i.e. qui fournissent des résultats sensiblement identiques à ceux fournis par le modèle cible sur un sous-ensemble de données d'apprentissage.

Chaque modèle témoin est entraîné sur une partition distincte de l'ensemble de données à traiter, et plus spécifiquement sur le premier sous-ensemble de données de la partition.

A l'issue de l'étape 42, N modèles témoins distincts sont obtenus et mémorisés.

Dans un mode de réalisation, l'étape 42 effectue un calcul par apprentissage machine d'un premier sous-ensemble de modèles témoins, sur un ensemble équilibré de N1 partitions, et un deuxième sous-ensemble de modèles témoins, sur un ensemble équilibré de N2 partitions, avec N=N1+N2.

Le procédé comporte alors, dans un mode de réalisation, un apprentissage machine 44 d'un premier modèle d'inférence d'appartenance, en connaissance des paramètres du modèle cible, et un apprentissage machine 46 d'un deuxième modèle d'inférence d'appartenance, sans connaissance du modèle cible.

Chacune des étapes d'apprentissage 44 et 46 met en oeuvre un premier sous-ensemble de modèles témoins.

Par exemple, pour N=288 modèles témoins calculés, le premier-sous ensemble comporte N1=256 modèles témoins, et un deuxième sous-ensemble de N2=32 modèles témoins, chacun des premier et deuxième sous-ensembles de modèles témoins étant appris sur un sous-ensemble équilibré de données d'apprentissage.

Le premier sous-ensemble de modèles témoins est utilisé pour l'apprentissage des modèles d'inférence d'appartenance.

Le deuxième sous-ensemble de modèles témoins est utilisé ultérieurement pour l'apprentissage d'un modèle de décision.

A titre d'exemple non limitatif, l'étape 44 met en oeuvre l'apprentissage d'un premier modèle d'inférence d'appartenance, qui met en oeuvre un calcul de valeurs caractéristiques d'influence de chaque donnée à traiter, en utilisant les modèles témoins préalablement calculés.

Le calcul de fonctions d'influence est décrit dans l'article « Membership Inference Attack Using Self Influence Functions » de G. Cohen et R. Giryes.

Dans un mode de réalisation lors de l'étape 44 :
- pour chaque modèle témoin du premier sous-ensemble de modèles témoins et chaque instance des données à traiter, l'influence de l'instance considérée par rapport aux instances de sa classe étant donné le modèle cible est calculée ;
- pour chaque modèle témoin et chaque instance, des valeurs caractéristiques sont calculées ;
- un apprentissage machine d'un modèle de décision, par exemple par régression logistique, d'appartenance ou de non-appartenance aux données d'apprentissage, la décision étant effectuée sur les valeurs caractéristiques calculées, en connaissance de l'appartenance effective de chaque instance au sous-ensemble de données d'apprentissage de chaque modèle témoin.

Par exemple, dans un mode de réalisation, les valeurs caractéristiques calculées comprennent, pour chaque instance et chaque modèle témoin, une ou plusieurs des valeurs caractéristiques suivantes : la valeur d'auto-influence, la moyenne de l'influence de l'instance sur les données de sa classe, la moyenne de l'influence des données de sa classe sur l'instance considérée, l'opposé de la valeur de sortie du modèle témoin pour la classe de l'instance, la perte de classification (en anglais « hinge loss »).

De manière classique dans le domaine de l'intelligence artificielle, le terme « logit » désigne un vecteur de sortie d'un modèle de classification entraîné par apprentissage machine, ce vecteur ayant une taille égale au nombre de classes, chaque composante de ce vecteur correspondant à une des classes et ayant une valeur, appelée valeur de sortie ci-dessus, pour ladite classe.

De manière classique dans le domaine de l'intelligence artificielle, la perte de classification, ou « hinge loss » en anglais, pour une instance d'une classe, est égale à la valeur de sortie pour sa classe moins la plus grande valeur parmi les autres valeurs de sortie.

Le premier modèle d'inférence d'appartenance ainsi entraîné fournit en sortie, pour chaque donnée à traiter Ei, une prédiction Préd1 (Ei) d'appartenance ou de non-appartenance de la donnée Ei aux données d'apprentissage du modèle de classification cible et un score de confiance associé Score₁ᵢ.

A titre d'exemple non limitatif, l'étape 46 met en oeuvre un deuxième modèle d'inférence d'appartenance met en oeuvre un ratio de vraisemblance de la fonction de perte de classification (en anglais « hinge loss »).

Un exemple de modèle d'inférence d'appartenance de ce type est décrit dans l'article « Membership inference attacks from first principles » de N. Carlini et al, publié dans IEEE Symposium on Security and Privacy, 2022.Dans un mode de réalisation, l'étape 46 comporte des sous-étapes de :
- calcul de la valeur de perte de classification (« hinge loss ») pour chaque modèle témoin et chaque instance ;
- détermination, pour chaque instance, des paramètres de deux gaussiennes, les paramètres étant respectivement la médiane et l'écart-type, et les gaussiennes étant respectivement :
   une première gaussienne représentative de la distribution de la valeur de perte de classification lorsque l'instance a été utilisée à l'apprentissage du modèle témoin ;
   une deuxième gaussienne représentative de la distribution de la valeur de perte de classification lorsque l'instance n'a pas été utilisée à l'apprentissage du modèle témoin.
- pour chaque instance, et chaque modèle témoin, détermination d'appartenance ou de non-appartenance en fonction des gaussiennes, comprenant un calcul du rapport entre le score de vraisemblance d'appartenance en utilisant la première gaussienne et du score de vraisemblance d'appartenance en utilisant la deuxième gaussienne ;
- et calcul d'un score moyen de l'attaque sur les modèles témoins, ce score étant analogue à une valeur de fidélité de l'apprentissage, permettant d'obtenir un score de confiance du deuxième modèle d'inférence d'appartenance pour l'instance considérée.

Ce deuxième modèle d'inférence d'appartenance ainsi entraîné fournit en sortie, pour chaque donnée à traiter Ei, une prédiction Préd2(Ei) d'appartenance ou de non-appartenance de la donnée Ei aux données d'apprentissage du modèle de classification cible, un score de confiance associé Score₂ᵢ.

De plus, dans ce mode de réalisation, le deuxième modèle d'inférence d'appartenance fournit aussi une valeur de fidélité de l'apprentissage (en anglais « train accuracy »), qui est également considérée comme une autre valeur de score de confiance associée à l'application de ce deuxième modèle d'inférence.

Le procédé comporte ensuite une étape 48 d'apprentissage d'un modèle de décision.

Cet apprentissage prend en entrée, pour chaque donnée à traiter, et pour chaque modèle témoin du deuxième sous-ensemble de modèles témoins, la prédiction d'appartenance obtenue par le modèle témoin. Comme déjà indiqué ci-dessus, les modèles témoins du deuxième sous-ensemble de modèles témoins sont de préférence des modèles témoins qui n'ont pas été utilisés pour l'apprentissage des modèles d'inférence d'appartenance.

Dans le mode de réalisation décrit en référence à la figure 2, l'apprentissage prend en entrée également le score d'appartenance fourni par chacun des modèles d'inférence d'appartenance.

Par ailleurs, pour chaque modèle témoin, l'appartenance ou non-appartenance de la donnée à traiter au premier ensemble de données (i.e. données d'apprentissage) utilisées pour l'entraînement du modèle témoin est connue, par construction du modèle témoin.

Il est alors possible d'entraîner un modèle de décision, par exemple un classifieur binaire, qui fournit en sortie une prédiction d'appartenance ou de non-appartenance qui est appelée prédiction consolidée, et optionnellement, un score de confiance associé.

La décision ainsi obtenue est plus fidèle que les prédictions respectives de chacun des modèles d'inférence d'appartenance, a fortiori lorsque les prédictions sont combinées en tenant compte de leurs scores de confiance respectifs.

Dans le cas où un seul classifieur binaire est entraîné à l'étape 48, la prédiction consolidée d'appartenance ou de non-appartenance fourni par ce classifieur constitue une décision finale.

Dans le cas où plusieurs classifieurs binaires distincts sont entraînés à l'étape 48, le procédé comporte également une étape 50 de détermination d'appartenance ou non appartenance (i.e décision finale) par combinaison des prédictions consolidées des classifieurs binaires.

Par exemple, lorsque le nombre de classifieurs binaires est impair, l'étape 50 met en oeuvre un vote majoritaire : la prédiction consolidée majoritaire est retenue comme décision finale d'appartenance ou de non-appartenance aux données d'apprentissage du modèle cible.

Dans un autre mode de réalisation, l'étape 50 met en oeuvre un apprentissage de pondérations à attribuer aux classifieurs utilisés.

Bien entendu, d'autres méthodes de combinaisons différentes sont envisageables pour un homme du métier.

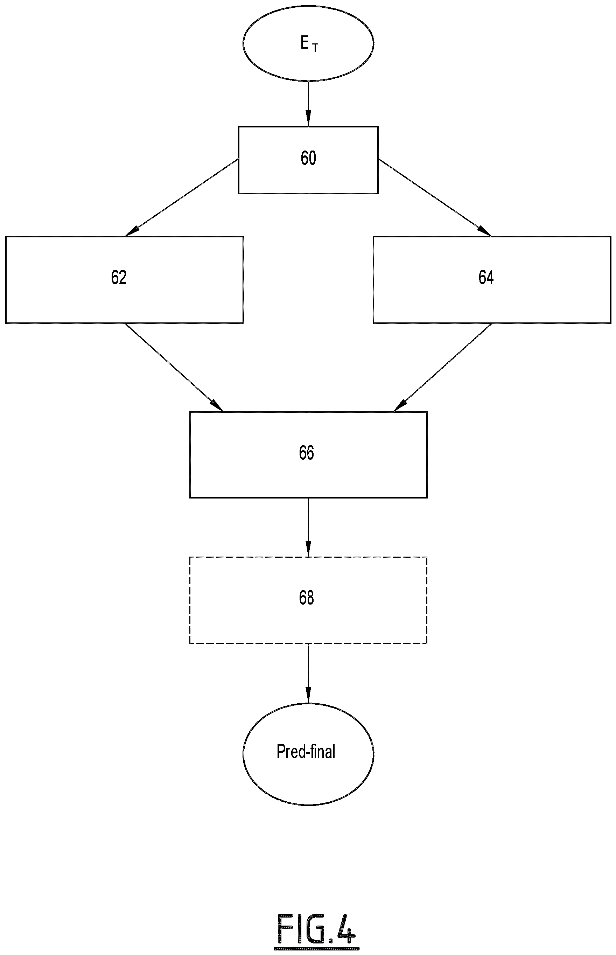

La figure 4 est un synoptique des principales étapes d'un procédé de détermination d'appartenance dans la phase opérationnelle, après mise en oeuvre de l'apprentissage décrit ci-dessus en référence à la figure 2, selon un mode de réalisation.

Pour une donnée à traiter E_{T}, par exemple une image, le procédé comprend l'application 60 du modèle cible, l'application 62, 64 des premier et deuxièmes modèles d'inférence d'appartenance, puis l'application 66 des modèles de décision préalablement entraînés et l'application, le cas échéant, de l'étape de détermination 68 pour obtenir une prédiction consolidée, et une décision finale d'appartenance ou non appartenance de la donnée à traiter E_{T} aux données d'apprentissage du modèle cible.

Le mode de réalisation décrit en référence aux figures 2 et 4 comporte la mise en oeuvre de deux modèles d'inférence d'appartenance distincts.

Bien entendu, le procédé décrit est généralisable sans difficulté à un nombre quelconque de modèles d'inférence d'appartenance distincts, par exemple trois, quatre ou plus, chaque modèle d'inférence d'appartenance étant appris sur des modèles témoins et fournissant une prédiction d'appartenance ou de non-appartenance aux données d'apprentissage et optionnellement, un ou plusieurs scores de confiance associés. L'apprentissage machine sur un deuxième sous-ensemble de modèles témoins, des paramètres d'au moins un modèle de décision prenant en entrée les prédictions d'appartenance ou de non-appartenance est effectué alors sur les prédictions obtenues par la pluralité de modèles d'inférence d'appartenance, et le cas échéant, les scores de confiance associés.

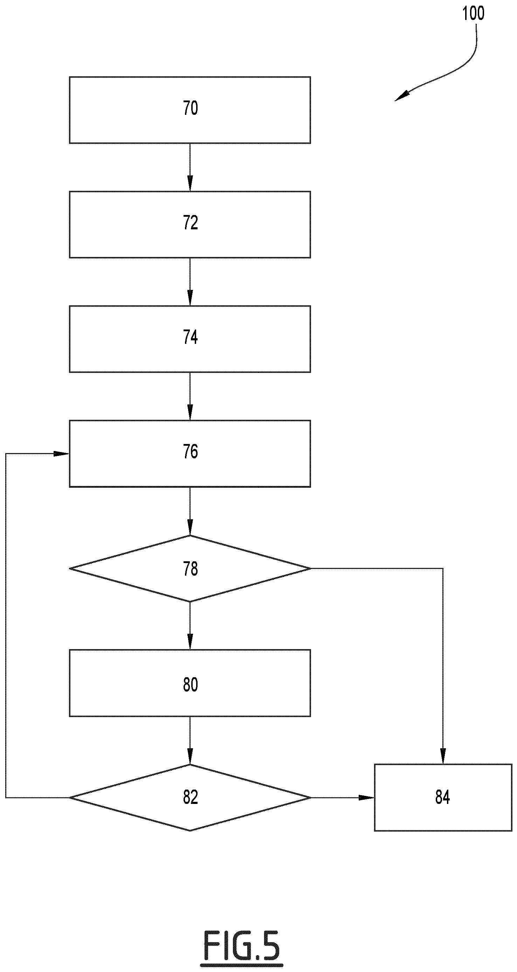

La figure 5 est un synoptique des principales étapes d'un procédé 100 de génération d'un modèle de classification de données par apprentissage machine sécurisé vis-à-vis d'attaques par inférence d'appartenance, pour des données d'apprentissage considérées sensibles, en mettant en oeuvre le procédé de détermination d'appartenance aux données d'apprentissage décrit ci-dessus.

Le procédé 100 de génération d'un modèle de classification de données par apprentissage machine sécurisé est mis en oeuvre par un processeur de calcul d'un dispositif électronique programmable.

Par exemple, le procédé est mis en oeuvre sous forme de briques logicielles exécutables, formant un programme d'ordinateur.

Le procédé 100 comprend une étape 70 d'apprentissage d'un modèle de classification MC sur un ensemble de données d'apprentissage, selon toute méthode d'apprentissage machine connue choisie.

Ensuite, une sélection 72 d'un ensemble DX de données à traiter est mise en oeuvre. L'ensemble DX de données à traiter comprend un sous-ensemble DS de données de l'ensemble de données d'apprentissage considérées sensibles, un sous-ensemble DA de données non sensibles de l'ensemble de données d'apprentissage, et un sous-ensemble DT de données de test qui ne font pas partie de données d'apprentissage.

De préférence, le cardinal de l'ensemble DX de données à traiter est supérieur ou égal à un cardinal Card0, par exemple Card0=1000, et de préférence le cardinal du sous-ensemble de données de test est au moins égal au cardinal de l'ensemble DX.

Le procédé 100 comprend ensuite une étape 74 de mise en oeuvre de la phase d'apprentissage du procédé de détermination d'appartenance aux données d'apprentissage tel que décrit ci-dessus. Cette étape 74 a pour résultat l'apprentissage d'au moins deux modèles d'inférence d'appartenance distincts et d'au moins un modèle de décision permettant de fournir une prédiction d'appartenance ou de non-appartenance consolidée.

Le procédé 100 comprend ensuite une itération d'étapes, commençant par l'application 76 de la phase opérationnelle de la prédiction d'appartenance sur chaque donnée à traiter de l'ensemble DX, et la mémorisation de la prédiction d'appartenance consolidée obtenue.

Une étape 78 de vérification de sécurité est ensuite appliquée, consistant à vérifier une attaque d'inférence d'appartenance a des chances d'aboutir sur une ou plusieurs données du sous-ensemble DS de données sensibles.

Dans un mode de réalisation, il est vérifié si pour au moins une des données du sous-ensemble DS, la prédiction d'appartenance consolidée fait partie d'un pourcentage fixé, par exemple 10%, des prédictions d'appartenance consolidées les plus élevées obtenues pour l'ensemble DX de données à traiter. Les données du sous-ensemble DS pour lesquelles cette condition est vérifiée sont appelées données DR ci-après. Si cette condition est vérifiée, il est considéré que la sécurité est insatisfaisante. Avantageusement, cela permet de vérifier si une ou plusieurs des données sensibles ressortent dans une attaque d'inférence d'appartenance par rapport à d'autres données à traiter.

Dans le cas où la vérification de sécurité 78 indique une sécurité satisfaisante, le procédé 100 prend fin (étape de fin 84).

Dans le cas où la vérification de sécurité 78 indique une sécurité insatisfaisante, l'étape 78 est suivie d'une étape 80 de mise en oeuvre d'un procédé de désapprentissage, permettant de retirer efficacement l'influence des données DR, qui sont dites données vulnérables, dans le modèle de classification MC. Un modèle de classification MC* légèrement modifié est alors obtenu.

Tout procédé de désapprentissage connu est applicable. Par exemple, le procédé utilisé est un procédé décrit dans « Towards Unbounded Machine Unlearning » de M. Kurmanji et al, publié en 2023, https://arxiv.org/abs/2302.09880.

Il est également vérifié à l'étape 82 si une condition d'arrêt s'applique. Par exemple, la condition d'arrêt porte sur les performances du modèle de classification MC*. Si les performances du modèle de classification MC* ne sont pas considérées satisfaisantes, l'étape 82 est suivie de l'arrêt 84.

Si les performances du modèle de classification MC* sont considérées satisfaisantes, les étapes 76 à 84 sont itérées.

Selon les variantes, l'étape 82 de vérification d'une condition d'arrêt n'est pas mise en oeuvre à chaque itération, mais seulement au bout d'un nombre prédéterminé d'itérations.

Selon des variantes, l'étape 82 de vérification d'une condition d'arrêt met en oeuvre une condition d'arrêt sur un critère temporel ou calculatoire.

Ainsi, le modèle de classification obtenu est sécurisé par rapport à un risque d'attaques d'inférence d'appartenance portant sur des données DS considérées sensibles faisant partie de l'ensemble de données d'apprentissage initial.

## Revendications

1. Procédé de détermination d'appartenance aux données d'apprentissage utilisées pour l'entraînement d'un modèle de classification de données par apprentissage machine, dit modèle cible (8), le procédé étant mis en oeuvre par un processeur de calcul, et comportant, dans une phase d'apprentissage, mise en oeuvre sur un ensemble (10) de données à traiter, des étapes de :
- génération (40) d'un nombre N supérieur à 2 de partitions distinctes (Part₁,...,Part_{N}) de l'ensemble de données à traiter en un premier (S1₁,..,S1_{N}) et un deuxième (S2₁,...,S2_{N}) sous-ensembles de données,
- calcul (42) par apprentissage machine de N modèles témoins (16₁,...,16N), chaque modèle témoin (16₁,..., 16N) ayant une même structure que ledit modèle cible (8), le calcul (42) comportant l'apprentissage des paramètres de chaque modèle témoin à partir d'un premier sous-ensemble (S1₁,..,S1_{N}) de données d'une des partitions, pour fournir en sortie une classification sensiblement identique à celle fournie par le modèle cible (8);
- apprentissage machine (44, 46) sur un premier sous-ensemble de modèles témoins d'au moins deux modèles d'inférence d'appartenance (26₁,..., 26_{P}) distincts fournissant chacun, pour chaque donnée à traiter, une prédiction d'appartenance ou de non-appartenance aux données d'apprentissage du modèle cible,
- apprentissage machine, sur un deuxième sous-ensemble de modèles témoins, des paramètres d'au moins un modèle de décision (48) prenant en entrée lesdites prédictions d'appartenance ou de non-appartenance et fournissant en sortie une prédiction d'appartenance ou de non-appartenance consolidée.

2. Procédé selon la revendication 1, dans lequel au moins un des modèles d'inférence d'appartenance fournit, pour chaque donnée à traiter, un score de confiance associé à la prédiction d'appartenance ou de non-appartenance aux données d'apprentissage du modèle cible, et dans lequel l'apprentissage machine dudit au moins un modèle de décision (48) prend en entrée lesdits scores de confiance.

3. Procédé selon la revendication 2, dans lequel chaque modèle d'inférence d'appartenance distinct fournit pour chaque donnée à traiter, un score de confiance associé à la prédiction d'appartenance ou de non-appartenance aux données d'apprentissage du modèle cible, et dans lequel l'apprentissage machine, sur un deuxième sous-ensemble de modèles témoins, des paramètres d'au moins un modèle de décision (48) prend en entrée lesdites prédictions d'appartenance ou de non-appartenance et les scores de confiance associés fournis par chaque modèle d'inférence d'appartenance distinct.

4. Procédé selon l'une des revendications 1 à 3, comportant en outre une phase opérationnelle comportant, pour au moins une donnée à traiter, des étapes de :
- mise en oeuvre de chacun desdits modèles d'inférence d'appartenance (62, 64) sur ladite donnée à traiter pour obtenir des prédictions d'appartenance ou de non-appartenance et les scores de confiance associés ;
- détermination (66, 68) d'une prédiction consolidée d'appartenance ou de non-appartenance de ladite donnée à traiter aux données d'apprentissage par application dudit modèle de décision sur les prédictions d'appartenance ou de non-appartenance et les scores de confiance associés.

5. Procédé selon l'une quelconque des revendications 1 à 4, dans lequel sont mis en oeuvre un premier modèle d'inférence d'appartenance utilisant une connaissance des paramètres du modèle cible, et un deuxième modèle d'inférence d'appartenance sans utilisation des paramètres du modèle cible.

6. Procédé selon l'une quelconque des revendications 1 à 5, dans lequel une pluralité de modèles de décision sont mis en oeuvre parmi des modèles de : régression logistique, forêt aléatoire, amplification adaptative, amplification de gradient, modèle bayésien naïf.

7. Procédé selon la revendication 6, comportant en outre une étape de détermination d'appartenance ou non-appartenance pour obtenir une prédiction finale d'appartenance ou non-appartenance par combinaison (50) des résultats des modèles de décision.

8. Procédé selon la revendication 7, dans lequel la combinaison (50) des résultats est effectuée par vote majoritaire ou vote majoritaire pondéré.

9. Programme d'ordinateur comportant des instructions logicielles qui, lorsqu'elles sont exécutées par un dispositif électronique programmable, mettent en oeuvre un procédé de détermination d'appartenance aux données d'apprentissage conforme aux revendications 1 à 8.

10. Procédé de génération d'un modèle de classification de données par apprentissage machine sécurisé vis-à-vis d'attaques par inférence d'appartenance, pour des données d'apprentissage sensibles, comportant les étapes suivantes mises en oeuvre par un processeur de calcul :
A)-apprentissage (70) d'un modèle de classification sur un ensemble de données d'apprentissage,
B)-sélection (72) d'un ensemble de données à traiter comportant un sous-ensemble de données sensibles de l'ensemble de données d'apprentissage, un sous-ensemble de données non sensibles de l'ensemble de données d'apprentissage, et un sous-ensemble de données de test qui ne font pas partie de données d'apprentissage,
C)-mise en oeuvre (74) d'une phase d'apprentissage d'un procédé de détermination d'appartenance aux données d'apprentissage conforme aux revendications 1 à 8, appliquée audit modèle de classification, pour obtenir au moins deux modèles d'inférence d'appartenance distincts et au moins un modèle de décision permettant de fournir une prédiction d'appartenance ou de non-appartenance consolidée ;
D1) pour chaque donnée à traiter, prédiction d'appartenance de ladite donnée à traiter l'ensemble de données d'apprentissage en appliquant lesdits modèles d'appartenance d'inférence distincts et de décision, et la mémorisation de la prédiction d'appartenance consolidée obtenue,
D2) vérification d'une condition de sécurité, et
D3) si la vérification indique une sécurité insatisfaisante pour au moins une donnée du sous-ensemble de données sensibles, dite donnée vulnérable, application d'un procédé de désapprentissage de l'au moins une donnée vulnérable pour obtenir un modèle de classification sécurisé.

11. Procédé selon la revendication 10, dans lequel les étapes D1), D2), D3) sont répétées jusqu'à ce que la condition de sécurité soit validée pour toutes les données sensibles ou jusqu'à ce qu'une condition d'arrêt soit vérifiée.

12. Procédé selon les revendications 10 à 11, dans lequel la vérification de la condition de sécurité indique si la prédiction d'appartenance consolidée pour au moins une donnée sensible fait partie d'un pourcentage prédéterminé des prédictions d'appartenance les plus élevées.

13. Dispositif de détermination d'appartenance aux données d'apprentissage utilisées pour l'entraînement d'un modèle de classification de données par apprentissage machine, dit modèle cible (8), le dispositif (2) comportant un processeur de calcul (4), configuré, dans une phase d'apprentissage, pour mettre en oeuvre sur un ensemble (10) de données à traiter :
- un module (20) de génération d'un nombre N supérieur à 2 de partitions distinctes (Part₁,...,Part_{N}) de l'ensemble de données à traiter en un premier (S1₁,..,S1_{N}) et un deuxième (S2₁,...,S2_{N}) sous-ensembles de données,
- un module (22) de calcul par apprentissage machine de N modèles témoins (16₁,...,16N), chaque modèle témoin (16₁,...,16N) ayant une même structure que ledit modèle cible (8), le calcul comportant l'apprentissage des paramètres de chaque modèle témoin à partir du premier sous-ensemble (16₁,...,16N) de données d'une des partitions, pour fournir en sortie une classification sensiblement identique à celle fournie par le modèle cible (8);
- un module (24) d'apprentissage machine sur un premier sous-ensemble de modèles témoins d'au moins deux modèles d'inférence d'appartenance distincts fournissant chacun, pour chaque donnée à traiter, une prédiction d'appartenance ou de non-appartenance aux données d'apprentissage du modèle cible,
- un module (30) d'apprentissage machine, sur un deuxième sous-ensemble de modèles témoins, des paramètres d'au moins un modèle de décision prenant en entrée lesdites prédictions d'appartenance ou de non-appartenance et fournissant en sortie une prédiction d'appartenance ou de non-appartenance consolidé.

14. Dispositif de génération d'un modèle de classification de données par apprentissage machine sécurisé vis-à-vis d'attaques par inférence d'appartenance comportant un processeur de calcul configuré pour exécuter un procédé de génération d'un modèle de classification de données par apprentissage machine sécurisé vis-à-vis d'attaques par inférence d'appartenance conforme aux revendications 10 à 12.
